# FASCICULE DE BREVET EUROPEEN

(11) **EP 0 935 538 B1**
(45) Date de publication et mention de la délivrance du brevet: **02.07.2003**
(21) Numéro de dépôt: 97913256.0
(22) Date de dépôt: 05.11.1997
(51) Int. Cl.: B60G 17/015, B60G 17/005, B60G 17/052

(54) **DISPOSITIF DE MAINTIEN A NIVEAU D'UN CHASSIS**
NIVEAUREGELEINRICHTUNG
DEVICE FOR MAINTAINING THE LEVEL OF A CHASSIS

(30) Priorité: 06.11.1996 FR 9613543
(43) Date de publication de la demande: 18.08.1999
(73) Titulaire: GENERAL TRAILERS FRANCE, 91042 Evry Cédex (FR)
(72) Inventeur: ROBLOT, Philippe, F-10130 Saint-Phal (FR); GANDOLFI, Patrick, F-89470 Moneteau (FR)
(74) Mandataire: Phélip, Bruno
(86) Numéro de dépôt international: FR9701984
(87) Numéro de publication internationale: WO98019876

(56) Documents cités:
- EP-A- 0 453 752
- EP-A- 0 517 546
- EP-A- 0 570 315
- EP-A- 0 666 190
- PATENT ABSTRACTS OF JAPAN vol. 014, no. 132 (M-0948), 13 mars 1990 & JP 02 003505 A (HITACHI CONSTR MACH CO LTD), 9 janvier 1990,
- PATENT ABSTRACTS OF JAPAN vol. 016, no. 157 (M-1236), 16 avril 1992 & JP 04 008613 A (HINO MOTORS LTD), 13 janvier 1992,
- PATENT ABSTRACTS OF JAPAN vol. 017, no. 389 (M-1449), 21 juillet 1993 & JP 05 069721 A (HINO MOTORS LTD), 23 mars 1993,
- PATENT ABSTRACTS OF JAPAN vol. 015, no. 386 (M-1163), 30 septembre 1991 & JP 03 157213 A (ISUZU MOTORS LTD), 5 juillet 1991,

## Description

L'invention concerne d'une manière générale un dispositif de maintien à un niveau ajusté d'un châssis d'un véhicule à suspension variable, un véhicule comprenant un tel dispositif ainsi qu'un procédé de maintien à un niveau ajusté d'un châssis d'un véhicule à suspension variable.

Lors du chargement et du déchargement d'un véhicule tel un camion, une remorque ou une semi-remorque, le niveau du plateau de chargement de ce véhicule peut varier au fur et à mesure que le plateau de chargement est rempli avec, ou vidé de, la marchandise. Alors que cette variation du niveau du plateau de chargement est sans importance lorsque le chargement et le déchargement se font sans pénétration d'un chariot ou analogue sur le plateau du véhicule, elle pose des problèmes importants lorsque le chargement et le déchargement se font au moyen d'un véhicule de chargement tel, par exemple, un chariot-élévateur, qui pénètre sur le plateau du véhicule pour déposer ou enlever de la marchandise.

En effet, lorsqu'un véhicule est mis à quai, le plateau de chargement peut monter ou descendre, pendant le chargement ou déchargement, par rapport au quai de chargement d'une hauteur de l'ordre de 15 à 20 cm. Cette valeur approximative dépend de la charge appliquée, des conditions de chargement ou déchargement et de la rigidité du véhicule. Une telle dénivellation peut constituer une source d'accident, compte tenu du risque de basculement du chariot de chargement lors du passage de cette dénivellation. Pour le moins, cette dénivellation constitue un obstacle à franchir qui entraîne un ralentissement substantiel du chargement et du déchargement du véhicule.

Un véhicule ayant un châssis et au moins un essieu relié au châssis par des amortisseurs hydrauliques à hauteur variable reliés à une première source d'un premier fluide est connu du document EP-A-0517546 correspondant au préambule de la revendication 1. Ce véhicule comprend un dispositif de maintien à un niveau ajusté moyennant des moyens de commande destinés à augmenter ou à réduire la pression du premier fluide contenu dans les amortisseurs pour maintenir le châssis à un niveau prédéterminé. Le véhicule comprend également des moyens à déploiement variable comprenant un amortisseur de suspension hydraulique contenant un deuxième fluide et qui est fixé par une de ses extrémités sur le châssis et par l'autre de ses extrémités sur l'essieu. Le dispositif de maintien à un niveau ajusté comprend des premiers moyens de commande destinés à commander le déploiement des moyens à déploiement variable, et des deuxièmes moyens de commande destinés à augmenter la pression du premier fluide contenu dans les amortisseurs jusqu'à ce que la pression sur les moyens à déploiement variable ne soit plus supérieure à celle du premier fluide contenu dans les amortisseurs.

Le but de l'invention est de pallier cet inconvénient et de proposer un dispositif capable de maintenir le plateau de chargement d'un véhicule à un niveau qui a été ajusté avant le chargement ou le déchargement de ce véhicule.

L'invention atteint ce but par les caractéristiques de la deuxième partie de la revendication 1.

Dans le cadre de la présente invention, le terme « suspension variable » comprend tous types de suspensions conçues de façon à permettre de varier le niveau du plateau de chargement d'un véhicule stationnaire par rapport au sol.

Ainsi, le dispositif de l'invention peut être appliqué à des véhicules à suspension pneumatique, ce qui correspond à la majorité des véhicules dont le niveau du plateau de chargement peut être réglé. Elle est applicable de manière analogue à des véhicules à suspension hydraulique et à suspension mixte hydraulique/pneumatique.

De même, bien que l'invention soit décrite ci-après en référence à un véhicule ayant un seul essieu (cas d'une semi-remorque) ou un seul essieu arrière (cas d'un camion ou d'une remorque), elle est aussi bien applicable à un véhicule ayant plusieurs essieux. Dans un tel cas, le véhicule peut être équipé d'un ou de plusieurs dispositifs selon l'invention.

Le dispositif de l'invention comprend des moyens à déploiement variable, tels que par exemple un ou plusieurs vérins. Selon l'invention ces moyens sont fixés seulement sur le châssis par une seule de leurs extrémités, l'autre étant libre et prenant appui seulement après déploiement.

Le déploiement des moyens à déploiement variable, lorsqu'ils sont constitués par un ou plusieurs vérins, consiste à déployer la partie mobile du ou des vérins, à leur faire prendre appui sur l'essieu, si la partie fixe est montée sur le châssis, et à le ou les bloquer dans cette position d'appui.

Les moyens de commande destinés respectivement à augmenter et à réduire la pression du fluide contenu dans ces éléments de la suspension variable peuvent être, par exemple, des pressostats et des capteurs de fin de course.

Le dispositif de maintien selon l'invention est énergétiquement autonome, la source d'énergie est avantageusement de l'air comprimé provenant soit du système de freinage, soit du système de suspension pneumatique. Ainsi, le dispositif de maintien peut fonctionner, lorsqu'il est monté sur une remorque ou une semi-remorque, tracteur attelé ou dételé. Compte tenu de l'utilisation du dispositif de maintien selon l'invention comme un moyen de blocage de la suspension au niveau ajusté, ce dispositif est utilisable dans la plage de débattement de la suspension.

L'invention concerne également les caractéristiques ci-après, considérées isolément ou selon toutes leurs combinaisons techniquement possibles:
- Le dispositif comprend, lorsque les moyens à déploiement variable sont constitués par au moins un vérin, un détecteur d'appui relié aux premiers et aux troisièmes moyens de commande, afin de pouvoir arrêter leurs actions lorsque le ou les vérins prennent appui sur l'essieu.
- Le détecteur d'appui est relié aux troisièmes moyens de commande de façon à pouvoir déclencher leur action lorsque le ou les vérins ne sont pas en appui sur l'essieu.
- Le vérin est un vérin hydraulique contenant un deuxième fluide. Ce deuxième fluide qui est avantageusement une huile hydraulique, peut être contenu dans un circuit séparé des circuits de freinage et de suspension.
- Le premier fluide est de l'air comprimé provenant d'une première source d'air comprimé. Cette première source d'air comprimé peut être un réservoir à pression, tel le réservoir du circuit pneumatique du système de freinage à air comprimé, ou un réservoir séparé à air comprimé auquel est relié également un circuit monte et baisse nécessaire à l'ajustement du niveau du plateau du véhicule. Le remplissage du réservoir à pression peut être fait automatiquement ou par commande manuelle.

La conception du dispositif de maintien à un niveau ajusté tel que décrit jusqu'ici est avantageusement simplifiée lorsqu'il utilise comme source d'énergie, uniquement de l'air comprimé. Toutefois, comme il a été démontré plus haut, une alimentation par de l'énergie électrique ou hydraulique en cas d'application sur un véhicule électrique ou sur un véhicule muni d'une centrale hydraulique, est également concevable.

Le but de l'invention est atteint par un véhicule ayant un châssis et au moins un essieu relié au châssis par des éléments d'une suspension variable reliés à une première source d'un premier fluide, ce véhicule comprenant un dispositif de maintien tel que défini plus haut.

Sur un tel véhicule, les moyens à déploiement variable peuvent être reliés à un accumulateur de transfert contenant de l'air comprimé provenant d'une première source d'air comprimé.

Le véhicule selon l'invention peut être une semi-remorque.

Le but de l'invention est également atteint par un procédé de maintien à un niveau ajusté d'un châssis d'un véhicule à suspension variable. Ce procédé, qui peut s'appliquer indifféremment à des véhicules à suspension pneumatique hydraulique ou mixte pneumatique/hydraulique et à des véhicules ayant un ou plusieurs essieux , comprend les étapes:
(a) mettre un plateau de chargement appartenant au châssis du véhicule au même niveau qu'un quai de chargement, en agissant sur des éléments de la suspension variable qui permettent de monter et baisser le niveau du châssis,
(b) bloquer le châssis au niveau ajusté en agissant sur des moyens à déploiement variable fixés par une de leurs extrémités sur le châssis, de façon que l'autre de leurs extrémités prenne appui, au moins à l'état déployé de ces moyens, sur un essieu du véhicule relié au châssis par les éléments de la suspension variable,
(c) lorsqu'une charge est appliquée au châssis ayant pour effet que la pression sur les moyens à déploiement variable dépasse une première valeur limite, augmenter la pression d'un premier fluide contenu dans les éléments de la suspension variable jusqu'à ce que la pression sur les moyens à déploiement variable ne soit plus supérieure à la première valeur limite,
(d) lorsque la charge appliquée au châssis est réduite, ayant pour effet que les moyens à déploiement variable ne soient plus en contact avec l'essieu, réduire la pression du premier fluide des éléments de la suspension variable jusqu'à ce que les moyens à déploiement variable soient à nouveau en contact avec l'essieu,
(e) répéter les étapes (c) et (d) autant de fois qu'il sera nécessaire pendant la durée d'un chargement ou d'un déchargement du véhicule,
(f) à la fin du chargement ou déchargement du véhicule, débloquer le châssis en agissant sur les moyens à déploiement variable.

Comme il a été exposé plus haut, les moyens à déploiement variable peuvent être constitués par un ou plusieurs vérins. Selon le type de moyens utilisés, l'étape consistant à agir sur les moyens à déploiement variable, comprend le déploiement ou le retrait en cas d'utilisation de vérins.

D'autres caractéristiques et avantages de l'invention ressortiront de la description d'un exemple de réalisation d'un dispositif de maintien selon l'invention faite ci-après en référence aux dessins dont:
La Figure 1 représente le schéma d'un dispositif de maintien à un niveau ajusté selon l'invention,
La Figure 2 représente une première variante du dispositif de la Figure 1, et
La Figure 3 représente une seconde variante du dispositif de la Figure 1.

Le dispositif de maintien selon l'invention, appelé par la suite aussi « circuit de blocage », est décrit en utilisant les mêmes numéros de référence pour des composantes identiques. Ainsi, le circuit de blocage comprend deux vérins hydrauliques 1 montés par une de leurs extrémités au châssis 10 du véhicule, et orientes de manière telle que, lorsque les vérins sont déployés, leurs extrémités libres prennent appui sur l'essieu 20.

Les vérins hydrauliques 1 sont reliés par un circuit hydraulique à un accumulateur de transfert 3. Entre les vérins hydrauliques 1 et l'accumulateur de transfert 3 est inséré un distributeur à clapet 4 à commande pneumatique normalement fermé. De plus, les vérins sont reliés par une ligne hydraulique à un pressostat de chargement 5 à commande pneumatique.

La prise d'appui des vérins 1 sur l'essieu 20 aussi bien que le détachement des vérins de l'essieu sont détectés au moyen de deux commutateurs de fin de course 6 à commande pneumatique reliés à une cellule logique pneumatique « ET » 61 afin de ne signaler la prise d'appui que lorsque les deux vérins sont en appui sur l'essieu 20.

Le circuit de blocage est relié à un réservoir de freinage 50 muni d'une valve de barrage 51 et à un circuit « monte et baisse » 60 et comprend, outre un filtre lubrificateur d'air de commande 7, une cellule logique pneumatique « INHIBITION » 8 relié aux commutateurs 6, un distributeur à clapet 9 à commande pneumatique pour le gonflage et le dégonflage des coussins d'air 40 de la suspension pneumatique, des cellules logiques pneumatiques « OU » 11, « ET » 12 et « INHIBITION » 13, ainsi qu'un sélecteur à commande pneumatique à bouton tournant 14. Le sélecteur 14 permet de choisir les régimes de fonctionnement du circuit de blocage, à savoir « Descente des vérins « D, « Blocage de la suspension » B et « Remontée des vérins » R.

Le circuit de blocage comprend enfin un distributeur à commande pneumatique 16 à rappel par ressort et dont le centre est ouvert à l'échappement. Un voyant lumineux pneumatique 17 destiné à signaler l'arrivée en contact des vérins 1 avec l'essieu 20 ainsi qu'un circuit de vérification permettant de constater la présence de pression dans le système de freinage complètent ce circuit de blocage.

Le circuit de vérification est relié à un vase de frein 52 et à une ligne de service de freinage 53 et des cellules logiques pneumatiques « OU » 54 et « INHIBITION » 55.

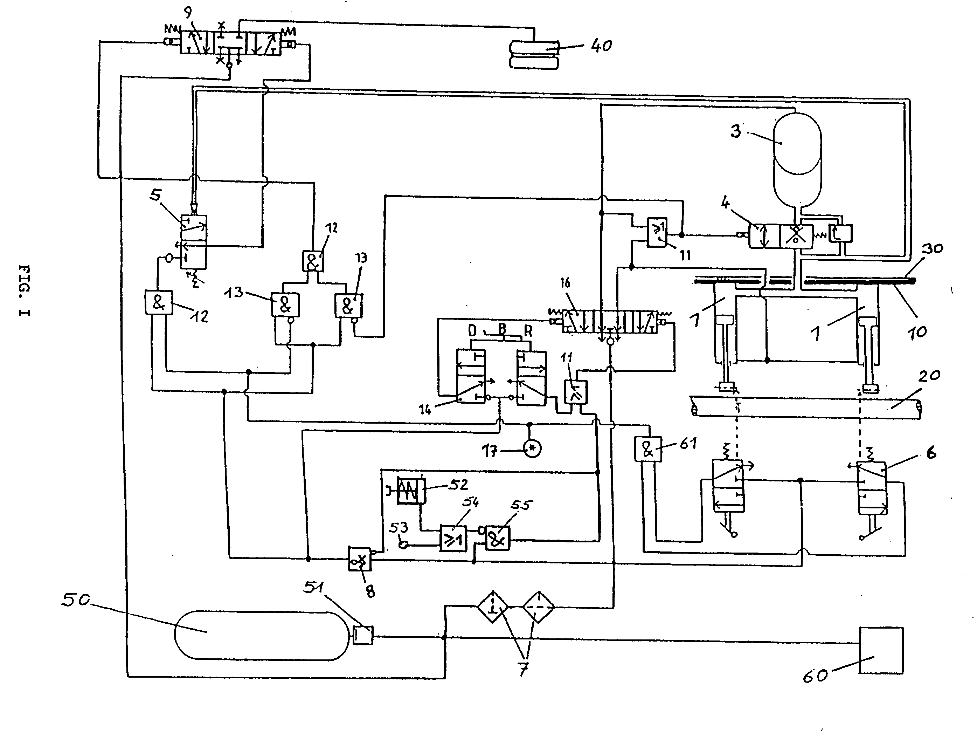

Les différentes composantes du circuit de blocage énoncées ci-avant sont reliées selon le schéma représenté sur la Figure 1 de façon à permettre le fonctionnement suivant du dispositif de maintien à niveau.

Lorsque le véhicule est en position de marche, le sélecteur à commande pneumatique à bouton tournant 14 est en position « Remontée des vérins » et le distributeur 16 est maintenu en position de « Remontée des vérins ».

Lorsque le véhicule est en position de stationnement, attelé ou non, le réservoir de freinage 50 est sous pression. Le distributeur à clapet 4 est en position normalement fermée et empêche les vérins 1 de se déployer.

Lorsque le véhicule est stationné le long d'un quai de chargement, on ajuste le niveau du plateau de chargement 30 du véhicule au moyen du circuit monte et baisse 60 du véhicule, avec le quai. Le niveau ayant été ajusté, la suspension est bloquée en tournant le bouton de commande de blocage de suspension 14 en position « Descente des vérins ». Par cette commande, les vérins 1 sont déployés.

Dès que les vérins 1 arrivent en contact avec l'essieu 20, signalé par l'allumage du voyant 17, le bouton de commande 14 est tourné dans la position « Blocage de la suspension ». Par cela, les vérins sont isolés du circuit de blocage.

Le fonctionnement du dispositif de maintien à niveau est alors différent selon qu'il s'agisse du chargement du véhicule ou du déchargement du véhicule.

En cas de chargement du véhicule, le fonctionnement du dispositif est le suivant.

Lorsqu'un véhicule de chargement, tel un chariot-élévateur, portant une charge utile monte sur le plateau 30 du véhicule, les vérins 1 empêchent l'affaissement de la suspension, ce qui augmente la pression « Pv » des vérins 1. Si la pression « Pv » est supérieure à une pression de déclenchement « Po » du pressostat 5, de l'air est envoyé dans les coussins d'air 40 de la suspension jusqu'à ce que la pression des vérins « Pv » soit inférieure à une pression de réenclenchement « Pr » du pressostat 5.

Lorsque le chariot, après avoir déposé sa charge utile sur le véhicule, quitte ce dernier, la nouvelle pression dans les coussins d'air 40 est trop importante par rapport à la charge. En conséquence, le plateau 30 du véhicule se lève et les vérins 1 ne sont plus en contact avec l'essieu 20. Cette perte d'appui est détectée par les commutateurs de fin de course 6 dont la position commutée permet un échappement de l'air des coussins d'air 40 au moyen du distributeur à clapet 9 jusqu'à ce que les vérins 1 prennent à nouveau appui sur l'essieu 20.

Cette suite de gonflement et dégonflement des coussins d'air se répétera jusqu'à ce que le chargement soit terminé. A la fin du chargement, le sélecteur à bouton tournant 14 est mis dans la position « Remontée des vérins ». Les vérins 1 sont rétractés et sont bloqués dans leur position repliée. A la suite de cela, le véhicule peut être défreiné et mis en position de marche.

Lors d'un déchargement d'un véhicule mis à quai, le fonctionnement du dispositif de maintien est le suivant.

Lorsqu'un chariot vide pénètre sur le plateau 30 du véhicule, les vérins 1 empêchent l'affaissement de la suspension. En même temps, la pression du vérin « Pv » augmente, sans provoquer une augmentation de pression des coussins d'air 40, puisque la pression des vérins « Pv » ne dépasse pas la pression de déclenchement « Po » du pressostat 5.

Lorsque le chariot, après avoir pris en charge une charge utile, quitte le plateau 30 du véhicule, le plateau se lève et les vérins 1 ne sont plus en contact avec l'essieu. Cette perte d'appui est constatée au moyen des commutateurs 6 qui déclenchent l'échappement de l'air des coussins d'air 40 au moyen du distributeur à clapet 9 jusqu'à ce que les vérins 1 viennent à nouveau en appui sur l'essieu 20.

La réduction de pression des coussins de suspension est provoquée autant de fois que le chariot enlève de la charge utile au véhicule.

Le déchargement fini, le bouton du sélecteur 14 est mis en position « Remontée des vérins », les vérins sont rétractés et bloqués dans la position repliée et le véhicule est défreiné et mis en position de marche.

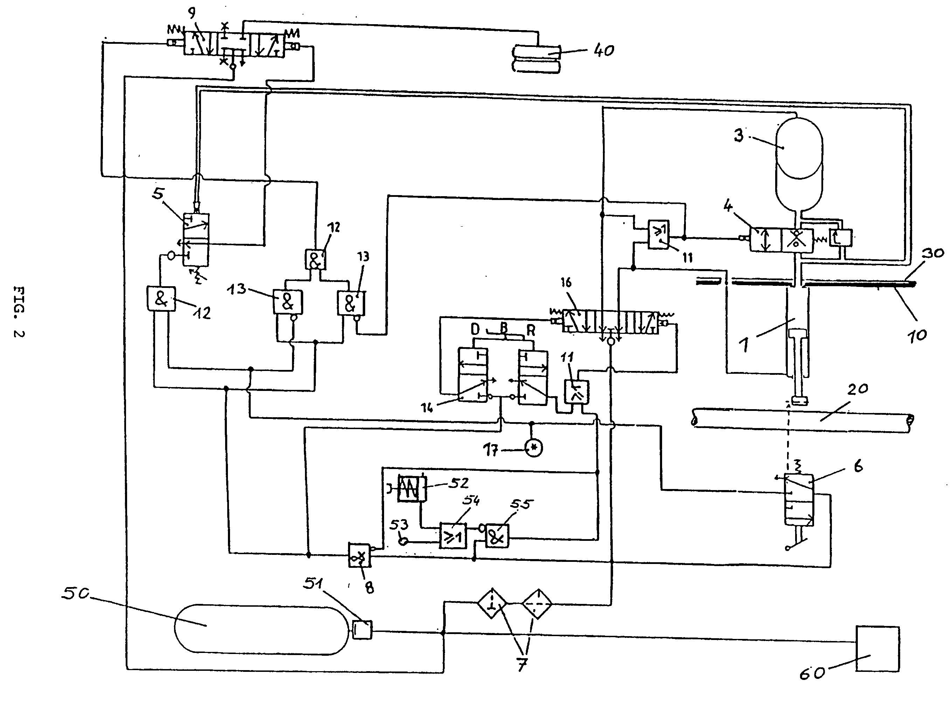

La Figure 2 représente, en variante du dispositif de maintien décrit ci-avant, un dispositif de maintien à un niveau ajusté selon l'invention dans lequel les moyens à déploiement variable sont constitués par un seul vérin.

Selon cette variante, le circuit de blocage diffère de celui décrit en référence à la Figure 1, en ce qu'il comprend un seul vérin hydraulique 1 monté par une de ses extrémités au châssis 10 du véhicule.

Ce vérin hydraulique 1 est relié à l'accumulateur de transfert 3 et au pressostat de chargement 5 de manière analogue à celle du circuit de blocage selon la Figure 1.

La prise d'appui du vérin 1 sur l'essieu 20 aussi bien que le détachement du vérin de l'essieu est détecté par un seul commutateur de fin de course 6 à commande pneumatique. Ce commutateur 6 est relié directement au voyant lumineux pneumatique 17 et aux cellules logiques pneumatiques « ET » et « INHIBITION » 13 commandant le pressostat 5 et le distributeur à clapet 9.

Le fonctionnement du circuit de blocage selon cette variante correspond à celui du circuit de blocage représenté sur la Figure 1.

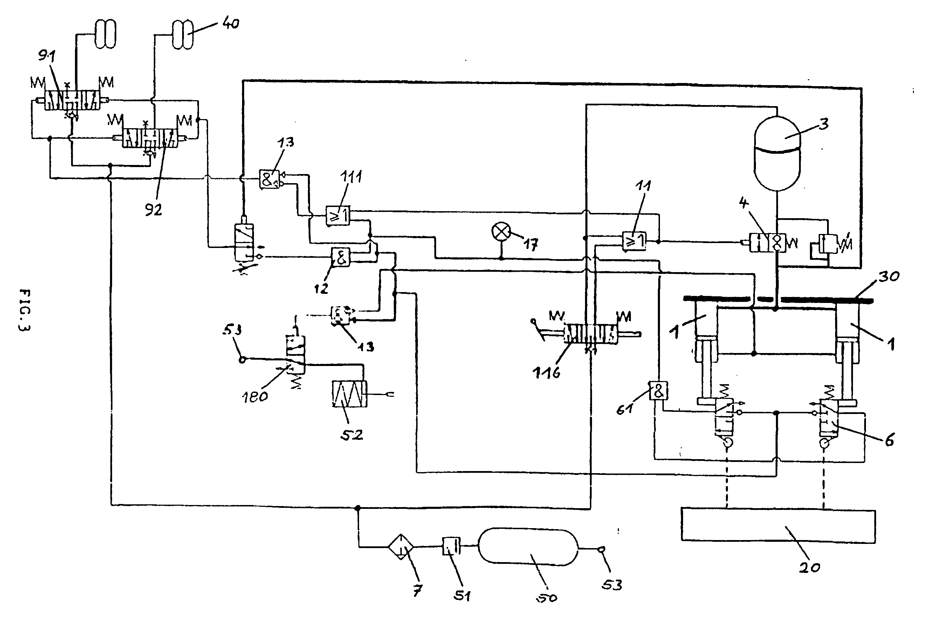

La Figure 3 représente, en seconde variante du dispositif de maintien décrit en référence à la Figure 1, un dispositif de maintien à un niveau ajusté selon l'invention dans lequel les régimes de fonctionnement du circuit de blocage, à savoir la descente des vérins, le blocage de la suspension et la remontée des vérins, sont commandés par un distributeur à commande manuelle 116 dont le centre est ouvert à l'échappement. Le distributeur 116 est verrouillable par rappel par ressort au point milieu.

Le circuit de vérification, qui est retié aux valves de frein 52 et à la ligne de service de freinage 53, comprend un distributeur pneumatique à commande pneumatique 180 et une cellule logique pneumatique « inhibition» 13 à la place des cellules logiques 8, 54 et 55 décrites plus haut.

Par ailleurs, la variante représentée sur la Figure 3 comprend, à la place d'un distributeur unique 9 pour le gonflage et le dégonflage des coussins d'air 40 de la suspension pneumatique, des distributeurs à clapets individuels 91 et 92 pour chacun des coussins d'air 40 de la suspension pneumatique.

Le fonctionnement du circuit de blocage selon cette seconde variante correspond, à part la commande manuelle à la place de la commande pneumatique, à celui du circuit de blocage représenté sur la Figure 1.

Les signes de référence insérés après les caractéristiques techniques mentionnées dans les revendications, ont pour seul but de faciliter la compréhension de ces dernières, et n'en limitent aucunement la portée.

## Revendications

1. Véhicule ayant un châssis (10) et au moins un essieu (20) relié au châssis par des éléments (40) d'une suspension variable reliés à une première source (50) d'un premier fluide, le véhicule comprenant un dispositif de maintien à un niveau ajusté destiné à intervenir lorsque le niveau du châssis a été ajusté au moyen des éléments (40) de la suspension variable, le dispositif comprenant des moyens à déploiement variable (1) fixés par une de leurs extrémités sur le châssis (10) et des premiers moyens de commande (9, 91, 92) destinés à commander le déploiement des moyens à déploiement variable pour bloquer le châssis au niveau ajusté par les éléments (40) de la suspension variable ;
**caractérisé en ce que**
les moyens à déploiement variable (1) sont fixés seulement sur le châssis (10) de façon que l'autre de leurs extrémités libres prenne appui, à l'état déployé de ces moyens, sur l'essieu (20) ; et **en ce que** le dispositif comprend :
- des deuxièmes moyens de commande (5, 9, 91, 92) destinés à détecter si la pression (Pv) sur les moyens à déploiement variable (1) dépasse une première valeur limite (Po) à cause d'une augmentation de la charge appliquée au châssis et à augmenter la pression d'un premier fluide contenu dans les éléments de la suspension variable (40) jusqu'à ce que la pression sur les moyens à déploiement variable (1) ne soit plus supérieure à la première valeur limite ;
- des troisièmes moyens de commande (6, 9, 91, 92) destinés à détecter si les moyens à déploiement variable (1) ne sont plus en appui sur l'essieu (20) à cause d'une réduction de la charge appliquée au châssis et à réduire la pression du premier fluide contenu dans les éléments de la suspension variable (40) jusqu'à ce que les moyens à déploiement variable soient à nouveau en contact avec l'essieu.

2. Véhicule selon la revendication 1, **caractérisé en ce que** les moyens à déploiement variable comprennent au moins un vérin (1).

3. Véhicule selon la revendication 2, **caractérisé en ce qu'**il comprend un détecteur d'appui (6) relié aux premiers (14, 116) et aux troisièmes moyens (9) de commande et destiné à arrêter leur action lorsque le vérin prend appui sur l'essieu (20).

4. Véhicule selon la revendication 3, **caractérisé en ce que** le détecteur d'appui (6) est relié aux troisièmes moyens de commande (9) de façon à pouvoir déclencher leur action lorsque le vérin n'est pas en appui sur l'essieu (20).

5. Véhicule selon l'une quelconque des revendications 2 à 4, **caractérisé en ce que** le vérin (1) est un vérin hydraulique contenant un deuxième fluide.

6. Véhicule selon l'une quelconque des revendications précédentes, **caractérisé en ce que** le premier fluide est de l'air comprimé provenant d'une source d'air comprimé (50) d'un circuit pneumatique du véhicule.

7. Véhicule selon la revendication 1, **caractérisé en ce que** les moyens à déploiement variable sont reliés à un accumulateur de transfert (3) contenant de l'air comprimé provenant de la première source (50) d'un premier fluide qui est de l'air comprimé.

8. Véhicule selon la revendication 7, **caractérisé en ce qu'**il est une semi-remorque.

9. Procédé de maintien à un niveau ajusté d'un châssis d'un véhicule à suspension variable, comprenant les étapes de:
a) mettre le châssis au même niveau qu'un quai de chargement, en agissant sur des éléments de la suspension variable qui permettent de monter et baisser le niveau du châssis;
b) bloquer le châssis au niveau ajusté en agissant sur des moyens à déploiement variable fixés par une de leurs extrémité sur le châssis de façon que l'autre de leurs extrémités prenne appui, au moins à l'état déployé de ces moyens, sur un essieu du véhicule relié au châssis par les éléments de la suspension variable;
c) lorsqu'une charge est appliquée au châssis ayant pour effet que la pression sur les moyens à déploiement variable dépasse une première valeur limite, faire augmenter la pression d'un premier fluide contenu dans les éléments de la suspension variable jusqu'à ce que la pression sur les moyens à déploiement variable ne soit plus supérieure à la première valeur limite;
d) lorsque la charge appliquée au châssis est réduite ayant pour effet que sur les moyens à déploiement variable ne soient plus en contact avec l'essieu, réduire la pression du premier fluide contenu dans les éléments de la suspension variable jusqu'à ce que les moyens à déploiement variable soient à nouveau en contact avec l'essieu;
e) répéter les étapes c) et d) autant de fois qu'il sera nécessaire pendant la durée d'un chargement ou déchargement du véhicule;
f) à la fin du chargement ou déchargement du véhicule, débloquer le châssis en agissant sur les moyens à déploiement variable.

## Patentansprüche

1. Fahrzeug mit einem Rahmen (10) und wenigstens einer Achse (20), die mit dem Rahmen durch Elemente (40) einer veränderbaren Aufhängung verbunden ist, die an eine erste Quelle (50) eines ersten Fluids angeschlossen sind, wobei das Fahrzeug eine Vorrichtung zum Halten auf einem eingestellten Niveau aufweist, die dazu bestimmt ist, einzugreifen, wenn das Niveau des Rahmens mittels der Elemente (40) der veränderbaren Aufhängung eingestellt wurde, wobei die Vorrichtung Mittel zum veränderbaren Ausfahren (1) aufweist, die an einem ihrer Enden am Rahmen (10) befestigt sind, sowie erste Steuermittel (9, 91, 92), die dazu bestimmt sind, das Ausfahren der Mittel zum veränderbaren Ausfahren zu steuern, um den Rahmen auf dem durch die Elemente (40) der veränderbaren Aufhängung eingestellten Niveau zu blockieren,
**dadurch gekennzeichnet, dass**
die Mittel zum veränderbaren Ausfahren (10) am Rahmen (10) derart befestigt sind, dass das andere der freien Enden im ausgefahrenen Zustand dieser Mittel an der Achse (20) anliegt, und dass die Vorrichtung aufweist:
- zweite Steuermittel (5, 9, 91, 92), die dazu bestimmt sind, festzustellen, ob der Druck (Pv) auf die Mittel zum veränderbaren Ausfahren (1) einen ersten Grenzwert (Po) aufgrund einer Erhöhung der Last überschreitet, die auf den Rahmen einwirkt, und den Druck eines ersten Fluids zu erhöhen, das in den Elementen der veränderbaren Aufhängung (40) enthalten ist, bis der Druck auf die Mittel zum veränderbaren Ausfahren (1) nicht mehr höher als der erste Grenzwert ist,
- dritte Steuermittel (6, 9, 91, 92), die dazu bestimmt sind, festzustellen, ob die Mittel zum veränderbaren Ausfahren (1) nicht mehr an der Achse (20) aufgrund einer Verringerung der Last, die auf den Rahmen wirkt, anliegen, und den Druck des ersten Fluids zu verringern, das in den Elementen zum veränderbaren Aufhängen (40) enthalten ist, bis die Mittel zum veränderbaren Ausfahren wieder die Achse kontaktieren.

2. Fahrzeug nach Anspruch 1, **dadurch gekennzeichnet, dass** die Mittel zum veränderbaren Ausfahren wenigstens einen Stellantrieb (1) aufweisen.

3. Fahrzeug nach Anspruch 2, **dadurch gekennzeichnet, dass** es einen Anschlagdetektor (6) aufweist, der mit den ersten (14, 116) und den dritten (9) Steuermitteln verbunden und dazu bestimmt ist, deren Aktivität zu stoppen, wenn der Stellantrieb an der Achse (20) anliegt.

4. Fahrzeug nach Anspruch 3, **dadurch gekennzeichnet, dass** der Anschlagdetektor (6) mit den dritten Steuermitteln (9) derart verbunden ist, dass er deren Aktivität auslösen kann, wenn der Stellantrieb die Achse (20) nicht kontaktiert.

5. Fahrzeug nach einem der Ansprüche 2 bis 4, **dadurch gekennzeichnet, dass** der Stellantrieb (1) ein hydraulischer Stellantrieb ist, der ein zweites Fluid enthält.

6. Fahrzeug nach einem der vorhergehenden Ansprüche, **dadurch gekennzeichnet, dass** das erste Fluid Druckluft ist, die von einer Druckluftquelle (50) eines Pneumatikkreises des Fahrzeugs stammt.

7. Fahrzeug nach Anspruch 1, **dadurch gekennzeichnet, dass** die Mittel zum veränderbaren Ausfahren mit einem Übertragungsakkumulator (3) verbunden sind, der Druckluft enthält, die von einer ersten Quelle (50) eines ersten Fluids stammt, das Druckluft ist.

8. Fahrzeug nach Anspruch 7, **dadurch gekennzeichnet, dass** es ein Sattelanhänger ist.

9. Verfahren zum Halten eines Rahmens eines Fahrzeugs mit veränderbarer Aufhängung auf einem eingestellten Niveau, die folgenden Schritte aufweisend:
a) Einstellen des Rahmens auf das selbe Niveau wie eine Laderampe, in dem auf die Elemente der veränderbaren Aufhängung eingewirkt wird, die es ermöglichen, das Niveau des Rahmens zu heben und zu senken,
b) Blockieren des Rahmens auf dem eingestellten Niveau, indem auf die Mittel zum veränderbaren Ausfahren eingewirkt wird, die mit ihren Enden am Rahmen derart befestigt sind, dass das eine ihrer Enden wenigstens im ausgefahrenen Zustand dieser Mittel an einer Achse des Fahrzeugs anliegt, die mit dem Rahmen durch die Elemente der veränderbaren Aufhängung verbunden sind,
c) wenn eine Last auf den Rahmen aufgebracht wird, die bewirkt, dass der Druck auf die Mittel zum veränderbaren Ausfahren einen ersten Grenzwert überschreitet, Erhöhen des Druckes eines ersten Fluids, das in den Elementen der veränderbaren Aufhängung enthalten ist; bis der Druck auf die Mittel zum veränderbaren Ausfahren nicht mehr höher als der erste Grenzwert ist,
d) wenn die auf den Rahmen einwirkende Last verringert wird, was zur Folge hat, dass die Mittel zum veränderbaren Ausfahren die Achse nicht mehr kontaktieren, Verringern des Drucks des ersten Fluids, das in den Elementen der veränderbaren Aufhängung enthalten ist, bis die Mittel zum veränderbaren Ausfahren wieder die Achse kontaktieren,
e) Wiederholen der Schritte c) und d) so oft es während der Dauer einer Be- oder Entladung des Fahrzeugs erforderlich ist,
f) Entsperren des Rahmens, indem auf die Mittel zum veränderbaren Ausfahren eingewirkt wird, am Ende des Be- oder Entladens des Fahrzeugs.

## Claims

1. Vehicle having a chassis (10) and at least an axle (20) connected to the chassis by means (40) of a variable suspension connected to a first source (50) of a first fluid, the vehicle comprising an adjusted level maintaining device designed for being used when the chassis level has been ajusted by the means (40) of the variable suspension, the device comprising variable deployment means (1) mounted by one end thereof on the chassis (10) and first control means (9, 91, 92) for controlling the deployment of the variable deployment means in order to block the chassis at the ajusted level by the means (40) of the variable suspension,
**characterised in that**
the variable deployment means (1) are mounted only on the chassis (10) such that the other free end thereof comes into pressing contact in the deployed state of said means on the axle (20) and **in that** the device comprises :
- second control means (5, 9, 91, 92) provided to detect if the pressure (PV) on the variable deployment means (1) is greater than a triggering pressure (PO) resulting from an increase of the load applied to the chassis and to increase the pressure of a first fluid provided inside the means of the variable suspension (40) until the pressure on the variable deployment means (1) is not greater than the first triggering pressure;
- third control means (6, 9, 91, 92) provided to detect if the variable deployment means (1) are not in pressing contact on the axle (20) resulting from a reduction of the load applied to the chassis and to reduce the pressure of the first fluid provided inside the means of the variable suspension (40) until the variable deployment means come again into pressing contact with the axle.

2. Vehicle according to claim 1, **characterised in that** variable deployment means comprise at least one jack (1).

3. Vehicle according to claim 2, **characterised in that** it comprises a pressing contact detector (6) connected to the first (14, 116) and third (9) control means for halting the action of these means when the jack comes into pressing contact with the axle (20).

4. Vehicle according to claim 3, **characterised in that** the pressing contact detector (6) is connected to the third control means (9) such as to be able to set said means into action when the jack is not in pressing contact with the axle (20).

5. Vehicle according to any one of claims 2 to 4, **characterised in that** the jack (1) is a hydraulic jack containing a second fluid.

6. Vehicle according to any one of the preceding claims, **characterised in that** the first fluid is compressed air coming from a compressed air source (50) of a pneumatic circuit of the vehicle.

7. Vehicle according to claim 1, **characterised in that** the variable deployment means are connected to a transfer accumulator (3) containing compressed air coming from the first source (50) of a first fluid which is compressed air.

8. Vehicle according to claim 7, **characterised in that** said vehicle is a semitrailer.

9. Method of maintaining at an adjusted level a chassis of a vehicle with variable suspension, comprising the steps of:
a) placing the chassis at the same level as a loading bay, by acting on elements of the variable suspension which allow the level of the chassis to be raised or lowered;
b) blocking the chassis at the adjusted level by acting on variable deployment means mounted by one end thereof on the chassis so that the other end thereof comes into pressing contact, at least in the deployed state of said means, on an axle of the vehicle connected to the chassis by the elements of the variable suspension;
c) when a load is applied to the chassis with effect that the pressure on the variable deployment means exceeds a first limit value, causing the pressure of a first fluid contained in the variable suspension elements to increase until the pressure on the variable deployment means no longer exceeds the first limit value;
d) when the load applied to the chassis is reduced with effect that the variable deployment means are no longer in contact with the axle, reducing the pressure of the first fluid contained in the elements of the variable suspension until the variable deployment means are again in contact with the axle;
e) repeating steps c) and d) as often as required during the period of a loading or unloading of the vehicle;
f) at the end of the loading or unloading of the vehicle, unblocking the chassis by acting on the variable deployment means.
